(19) Europäisches Patentamt
European Patent Office
Office européen des brevets

(11) **EP 3 207 092 B1**

(12) **EUROPÄISCHE PATENTSCHRIFT**

(45) Veröffentlichungstag und Bekanntmachung des Hinweises auf die Patenterteilung:
**11.08.2021 Patentblatt 2021/32**

(51) Int Cl.:
***C08L 33/06*** *(2006.01)*     ***C08L 23/08*** *(2006.01)*

(21) Anmeldenummer: **15778908.2**

(86) Internationale Anmeldenummer:
**PCT/EP2015/073139**

(22) Anmeldetag: **07.10.2015**

(87) Internationale Veröffentlichungsnummer:
**WO 2016/058887 (21.04.2016 Gazette 2016/16)**

(54) **THERMISCH EXPANDIERBARE ZUSAMMENSETZUNGEN**

THERMALLY EXPANDABLE COMPOSITIONS

COMPOSITIONS THERMO-EXPANSIBLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.10.2014 DE 102014221060**

(43) Veröffentlichungstag der Anmeldung:
**23.08.2017 Patentblatt 2017/34**

(73) Patentinhaber: **Henkel AG & Co. KGaA**
**40589 Düsseldorf (DE)**

(72) Erfinder:
- **KOHLSTRUNG, Rainer**
**68723 Plankstadt (DE)**
- **RAPPMANN, Klaus**
**69469 Weinheim-Rittenweier (DE)**

(56) Entgegenhaltungen:
DE-A1-102011 080 223    US-A1- 2004 260 012
US-A1- 2009 239 962    US-B1- 6 528 550

- **None**

**Beschreibung**

Die vorliegende Anmeldung betrifft eine thermisch expandierbare Zusammensetzung, die mindestens ein peroxidisch vernetzendes Polymer, welches nicht Glycidyl(meth)acrylat als Monomer einpolymerisiert enthält, mindestens ein Polymer, welches zu einem Anteil von 2 bis 20 Gew.-%, bezogen auf das jeweilige Polymer, Glycidyl(meth)acrylat als Monomer einpolymerisiert enthält, mindestens ein Peroxid und mindestens ein endothermes chemisches Treibmittel enthält, Formkörper, die diese Zusammensetzung enthalten, sowie ein Verfahren zum Abdichten und Füllen von Hohlräumen in Bauteilen, zum Verstärken oder Versteifen von Bauteilen, insbesondere hohlen Bauteilen, und zum Verkleben von beweglichen Bauteilen unter Verwendung derartiger Formkörper.

Moderne Fahrzeuge und Fahrzeugteile weisen eine Vielzahl von Hohlräumen auf, die abgedichtet werden müssen, um den Eintritt von Feuchtigkeit und Verschmutzungen zu verhindern, da diese zur Korrosion an den entsprechenden Karosserieteilen von innen heraus führen kann. Dies trifft insbesondere auf moderne selbst tragende Karosseriekonstruktionen zu, bei denen eine schwere Rahmenkonstruktion durch leichtgewichtige, strukturfeste Rahmengerüste aus vorgefertigten Hohlraumprofilen ersetzt wird. Derartige Konstruktionen weisen systembedingt eine Reihe von Hohlräumen auf, die gegen das Eindringen von Feuchtigkeit und Verschmutzungen abgedichtet werden müssen. Derartige Abdichtungen dienen weiterhin dem Zweck, die Weiterleitung von Luftschall in derartigen Hohlräumen zu vermeiden und somit unangenehme Fahrzeuglauf- und Windgeräusche zu mindern und somit den Fahrkomfort im Fahrzeug zu steigern.

Schottteile, die eine abdichtende und/oder akustische Wirkung in derartigen Hohlräumen bewirken, werden häufig als "pillar filler", "baffles" oder "acoustic baffles" bezeichnet. Sie bestehen in der Regel entweder vollständig aus thermisch expandierbaren Formkörpern oder aus Formkörpern, die einen Träger und in ihrem Peripheriebereich expandierbare polymere Zusammensetzungen enthalten. Diese Schottteile werden im Rohbau durch Einhängen, Einclipsen, Verschrauben oder Anschweißen an den offenen Baustrukturen befestigt. Nach dem Schließen der Baustrukturen im Rohbau und den weiteren Vorbehandlungen der Karosserie wird dann die Prozesswärme der Öfen zur Aushärtung der kathodischen Tauchlackierung ausgenutzt, um die Expansion des expandierbaren Teils des Schottteils auszulösen um somit den Querschnitt des Hohlraums abzudichten.

In modernen Fahrzeugen werden ferner immer häufiger metallische Leichtbauteile für eine konstant maßhaltige Serienfertigung mit vorgegebener Steifigkeit und Strukturfestigkeit benötigt. Insbesondere im Fahrzeugbau ist im Zuge der gewünschten Gewichtsersparnis Bedarf für metallische Leichtbauteile aus dünnwandigen Blechen, die trotzdem ausreichende Steifigkeit und Strukturfestigkeit besitzen. Auch hier kommen Formkörper aus thermisch expandierbaren Zusammensetzungen, die die nötigen Stützeigenschaften verleihen zum Einsatz.

Entsprechende thermisch expandierbare Zusammensetzung werden zum Beispiel in den Schriften WO 2008/034755, WO 2007/039309, WO 2013/017536 und der deutschen Anmeldung 10 2012 221 192.6 beschrieben. Diese thermisch expandierbaren Zusammensetzungen finden auch Einsatz im Automobilbereich. US 2004/260012 A1 beschreibt Heißschmelzklebstoffzusammensetzungen in Form von frei-fließenden Pellets. Diese Zusammensetzungen enthalten bevorzugt ein vernetzbares Harz, einen Haftvermittler, einen Radikalstarter, einen Füller und ein Treibmittel. US 6 528 550 B1 offenbart vernetzte Schäume von Ethylen-Vinylacetat-Copolymeren und Säure-Copolymeren, die neben den genannten Polymeren ein Vernetzungsmittel und ein exothermes Treibmittel enthalten.

In derartigen expandierbaren Zusammensetzungen, wie beispielsweise Kautschuk-Vulkanisaten (Schwefel, Peroxid oder Benzochinondioxim) zur Abdichtung und Verklebung, Ethylenvinylacetatbasierten Hohlraumabschottungen, Epoxid-basierten Stützschäumen und expandierbaren Versiegelungsmassen im Automobilbau, werden heutzutage exotherme Treibmittel, wie beispielsweise ADCA (Azodicarbonamid), OBSH (4,4'-Oxybis(benzolsulfonylhydrazid)), DNPT (Dinitrosopentamethylentetramin), PTSS (p-Toluolsemicarbazid), BSH (Benzol-4-sulfonohydrazid), TSH (Toluol-4-sulfonohydrazid), 5-PT (5-Phenyltetrazol) und ähnliche, verwendet.

Diese Treibmittel haben den Nachteil, dass sie eine respiratorische Sensitivierung auslösen können, aus toxikologischer Sicht generell bedenklich sind, oder explosiv sind. Darüber hinaus entstehen bei ihrem Zerfall Nebenprodukte wie Ammoniak, Formamid, Formaldehyd oder Nitrosamine, die gemäß der Global Automotive Declarable Substance List (GADSL), IFA-KMR-List 08/2012 oder dem BGIA-Bericht "Index of hatardous substances 2012" im Automobilbau verboten sind. Zusätzlich ist bei der Verwendung von exothermen Treibmitteln der VOC-Gehalt (Gehalt flüchtiger organischer Verbindungen) sehr hoch.

Ferner hängt aufgrund des exothermen Zerfalls und des engen Temperaturbereichs der Zerfallstemperatur der obigen Treibmittel die Schaumstruktur von der Härtungs-/Schäumtemperaturen ab, die üblicherweise im Bereich 140-220°C liegen, und kann je nach Temperaturbereich sehr stark variieren. Dadurch schwanken die Expansionsrate und die Schaumstruktur zwischen den minimalen und maximalen Prozesstemperaturen. Die Schaumstruktur beeinflusst wiederum die Absorption von Wasser bei unterschiedlichen Härtungstemperaturen, die gerade bei grobporigen Schäumen sehr hoch sein kann. Bei Temperaturen unterhalb von 140°C können die genannten Treibmittel nicht effektiv verwendet werden.

Hinsichtlich der Wasserabsorption ist es vor allem beim Einsatz im Automobilbereich sehr wichtig, dass die Wasserabsorption möglichst gering gehalten wird. Aufgrund der besseren Korrosionsbeständigkeit und Langzeithaltbarkeit wird im Automobilbereich eine geringe Wasserabsorption gefordert. Der Austausch von exothermen Treibmitteln gegen endotherme Treibmittel kann aber zu einer Erhöhung der Wasserabsorption führen.

Aufgabe der vorliegenden Erfindung war es daher, thermisch expandierbare Massen zur Verfügung zu stellen, die ohne die genannten exothermen Treibmittel auskommen können aber in gleicher Weise wie die bekannten Massen für die oben beschriebenen Verwendungen geeignet sind und vor allem eine geringe Wasserabsorption aufweisen.

Diese Aufgabe wird überraschender Weise durch thermisch expandierbare Zusammensetzungen gelöst, die

a) mindestens ein peroxidisch vernetzendes Polymer, welches nicht Glycidyl(meth)acrylat als Monomer einpolymerisiert enthält,
b) mindestens ein Polymer, welches zu einem Anteil von 2 bis 20 Gew.-%, bezogen auf das jeweilige Polymer, Glycidyl(meth)acrylat als Monomer einpolymerisiert enthält,
c) mindestens ein Peroxid und
d) mindestens ein endothermes chemisches Treibmittel enthalten.

Entsprechende Zusammensetzungen überwinden die bekannten Nachteile und erfüllen gleichzeitig die an derartige thermisch expandierbare Zusammensetzungen gestellten Anforderungen in einem hohen Maße, vor allem in Hinblick auf eine hervorragende Expansion und eine geringe Wasseraufnahme.

Ein erster Gegenstand der vorliegenden Erfindung sind daher thermisch expandierbare Zusammensetzungen, enthaltend

a) mindestens ein peroxidisch vernetzendes Polymer, welches nicht Glycidyl(meth)acrylat als Monomer einpolymerisiert enthält,
b) mindestens ein Polymer, welches zu einem Anteil von 2 bis 20 Gew.-%, bezogen auf das jeweilige Polymer, Glycidyl(meth)acrylat als Monomer einpolymerisiert enthält,
c) mindestens ein Peroxid und
d) mindestens ein endothermes chemisches Treibmittel.

Als einen wesentlichen Bestandteil enthalten die Zusammensetzungen ein endothermes chemische Treibmittel, welche den Vorteil haben, dass sie weder gesundheitsschädlich noch explosiv sind und bei der Expansion geringere Mengen an flüchtigen organischen Verbindungen (VOC) entstehen. Die Zersetzungsprodukte sind im wesentlichen $CO_2$ und Wasser. Ferner haben die damit hergestellten Produkte eine gleichmäßigere Schaumstruktur über den gesamten Prozesstemperaturbereich, der für die Härtung genutzt wird. Dadurch ergibt sich im vorliegenden Fall in Kombination mit den anderen Komponenten der Zusammensetzung auch eine besonders geringere Wasserabsorption. Schließlich ist die Zersetzungstemperatur der endothermen Treibmittel, insbesondere von Mischungen davon, im Vergleich zu konventionellen exothermen Triebmitteln geringer und daher können Prozesstemperatur verringert und Energie gespart werden.

Unter einem chemischen Treibmittel werden erfindungsgemäß Verbindungen verstanden, die sich bei Einwirkung von Wärme zersetzen und dabei Gase freisetzen. Insbesondere sind die endothermen chemischen Treibmittel ausgewählt aus Bicarbonaten, festen, optional funktionalisierten, Polycarbonsäuren und deren Salzen und Mischungen daraus.

Geeignete Bicarbonate (Hydrogencarbonate) sind solche der Formel $XHCO_3$, wobei X ein beliebiges Kation sein kann, insbesondere ein Alkalimetallion, vorzugsweise $Na^+$ oder $K^+$, wobei $Na^+$ äußerst bevorzugt ist. Weitere geeignete Kationen $X^+$ können ausgewählt sein aus $NH_4^+$, ½ $Zn^{2+}$, ½ $Mg^{2+}$, ½ $Ca^{2+}$ und deren Mischungen. Besonders bevorzugt werden Natrium- und/oder Kaliumhydrogencarbonat eingesetzt, insbesondere Natriumhydrogencarbonat.

Geeignete Polycarbonsäuren schließen ein, ohne darauf beschränkt zu sein, feste, organische Di-, Tri- oder Tetrasäuren, insbesondere Hydroxy-funktionalisierte oder ungesättigte Di-, Tri-, Tetra- oder Polycarbonsäuren, wie beispielsweise Citronensäure, Weinsäure, Äpfelsäure, Fumarsäure und Maleinsäure. Besonders bevorzugt ist die Verwendung von Citronensäure. Citronensäure ist unter anderem deshalb vorteilhaft, da es ein ökologisch nachhaltiges Treibmittel darstellt.

Ebenfalls geeignet sind die Salze der genannten Säuren sowie Mischungen von zwei oder mehr der beschriebenen Verbindungen. Bei Salzen der Polycarbonsäuren wird das Gegenion bevorzugt ausgewählt aus $Na^+$, $K^+$, $NH_4^+$, ½ $Zn^{2+}$, ½ $Mg^{2+}$, ½ $Ca^{2+}$ und deren Mischungen wobei $Na^+$ und $K^+$, insbesondere $Na^+$ bevorzugt ist. Insbesondere die Salze der Polycarbonsäuren zeigen zu höheren Temperaturen hin verschobene Zersetzungstemperaturen, so dass ein breiteres Temperaturinterval der Zersetzung durch Abmischungen eingestellt werden kann.

Bei dem Einsatz von Polycarbonsäuren können vorzugsweise auch zusätzlich Carbonate eingesetzt. Bevorzugt ist dabei eine Mischung aus Hydrogencarbonaten und Carbonaten sowie Polycarbonsäuren, wodurch gezielt unterschiedliche Aktivierungsstufen und Zersetzungsreaktionen eingestellt werden können.

Besonders bevorzugte Treibmittel sind Natriumhydrogencarbonat und/oder Zitronensäure/Citrate, ganz besonders bevorzugt ist das Treibmittel eine Mischung von Natriumhydrogencarbonat und Zitronensäure. Eine derartige Mischung hat im Vergleich zu konventionellen exothermen Treibmitteln wie ADCA oder OBSH eine sehr niedrige Starttemperatur von nur 120-140°C, wohingegen OBSH eine Starttemperatur von 140-160°C und ADCA aktiviert mit Zinksalzen eine Starttemperatur von 160-170°C und nicht aktiviert von sogar 210-220°C hat.

Die Treibmittel können ferner weitere Zusatzstoffe enthalten, wie insbesondere Calciumoxid, Zeolithe, Zinkoxid und/oder Magnesiumoxid. Calciumoxid, Zinkoxid und/oder Magnesiumoxid können dabei zur Aktivierung dienen.

In verschiedenen Ausführungsformen enthalten die thermisch expandierbaren Zusammensetzungen das Treibmittel in einer Menge von 0,1 bis 40 Gew.-%, bevorzugt 1 bis 35 Gew.-%, bevorzugt 5 bis 35 Gew.-%, besonders bevorzugt 10 bis 30 Gew.-%, ganz besonders bevorzugt 15 bis 25 Gew.-% bezogen auf die Gesamtzusammensetzung. Dabei beziehen sich die Gew.-%, soweit nicht anders beschreiben, auf die Gesamtzusammensetzung vor der Expansion.

In einer bevorzugten Ausführungsform enthalten die Zusammensetzungen 1 bis 10 Gew.-%, bevorzugt 2 bis 8 Gew.-% Natriumhydrogencarbonat und 5 bis 35 Gew.-%, bevorzugt 10 bis 25 Gew.-%, ganz bevorzugt 15 bis 22 Gew.-% Zitronensäure. Dabei beziehen sich die Gew.-%, soweit nicht anders beschreiben, auf die Gesamtzusammensetzung vor der Expansion. Bevorzugt ist das Verhältnis von Natriumhydrogencarbonat zu Zitronensäure von 1:1 bis 1:20, bevorzugt von 1:2 bis 1:10.

In einer besonders bevorzugten Ausführungsform wird das Treibmittel als "Masterbatch" in die thermisch expandierbare Zusammensetzung eingebracht. Unter dem Masterbatch versteht man eine Vormischung des zu verwendenden Treibmittels z.B. mit einem Polymer, vorzugsweise den eingesetzten Polymeren a) und b). Neben den prozessualen Vorteilen hat diese Vorgehensweise den Vorteil, dass das Treibmittel besonders homogen und schonend verteilt werden kann und dabei weniger Hitze durch das Kneten/Mischen entsteht. Das Treibmittel kann so vor einer ungewollten Zersetzung geschützt werden. Besonders bevorzugt ist ein Masterbatch, welches das mindestens eine endotherme Treibmittel, bevorzugt Natriumhydrogencarbonat und Zitronensäure, und mindestens ein Polymer enthält, bevorzugt ein Teil des peroxidisch vernetzbaren Polymers a). Daneben kann das Masterbatch auch weitere Komponenten enthalten, wie Talkum und/oder Antioxidantien.

Die thermisch expandierbaren Zubereitungen sind bevorzugt im Wesentlichen frei von ADCA (Azodicarbonamid) und/oder OBSH (4,4'-Oxybis(benzolsulfonylhydrazid)), insbesondere von exothermen Treibmitteln. Unter dem Begriff "im Wesentlichen frei von" wird erfindungsgemäß verstanden, wenn die Zusammensetzungen weniger als 3 Gew.-%, vorzugsweise weniger als 1 Gew.-%, ganz besonders bevorzugt weniger als 0,1 Gew.-% der jeweiligen Substanz, insbesondere nicht die jeweilige Substanz enthalten.

Neben dem endothermen Treibmittel enthält die thermisch expandierbare Zusammensetzung als Bindemittelsystem mindestens ein peroxidisch vernetzbares Polymer a), welches nicht Glycidyl(meth)acrylat als Monomer einpolymerisiert enthält. Mit den Klammern um meth wird ausgedrückt, dass sowohl Glycidylmethacrylate als auch Glycidylacrylat gemeint sind.

Als peroxidisch vernetzbare Polymere kommen prinzipiell alle thermoplastischen Polymere und thermoplastischen Elastomere in Frage, die sich peroxidisch vernetzen lassen. Als "peroxidisch vernetzbar" bezeichnet der Fachmann derartige Polymere, bei denen durch Einwirkung eines radikalischen Starters ein Wasserstoffatom aus der Haupt- oder einer Nebenkette abstrahiert werden kann, so dass ein Radikal zurückbleibt, das in einem zweiten Reaktionsschritt andere Polymerketten angreift.

In einer bevorzugten Ausführungsform ist das mindestens eine peroxidisch vernetzbare Polymer a) ausgewählt aus Styrol-Butadien-Blockcopolymeren, Styrol-Isopren-Blockcopolymeren, Ethylen-Vinylacetat-Copolymeren, funktionalisierten Ethylen-Vinylacetat-Copolymeren, funktionalisierten Ethylen-Butylacrylat-Copolymeren, Ethylen-Methylacrylat-Copolymeren, Ethylen-Ethylacrylat-Copolymeren, Ethylen-Butylacrylat-Copolymeren, Ethylen-(Meth)acrylsäure-Copolymeren, Ethylen-2-Ethylhexyacrylat-Colpolymeren, Ethylen-Acrylester-Copolymeren und Polyolefinen, wie beispielsweise Polyethylen oder Polypropylen.

Unter einem funktionalisierten Copolymeren wird dabei erfindungsgemäß ein Copolymer verstanden, das mit zusätzlichen Hydroxidgruppen, Amingruppen, Carboxygruppen, Anhydridgruppen und/oder Acrylatgruppen-Gruppen versehen ist.

Besonders vorteilhaft im Sinne der vorliegenden Erfindung sind Ethylen-Vinylacteat-Copolymere, funktionalisierte Ethylen-Vinylacetat-Copolymere, funktionalisierte Ethylen-Butylacrylat-Copolymere, Ethylen-Propylen-Dien-Copolymere, Styrol-Butadien-Blockcopolymere, Styrol-Isopren-Blockcopolymere, Ethylen-Methylacrylat-Copolymere, Ethylen-Ethylacrylat-Copolymere, Ethylen-Butylacrylat-Copolymere und Ethylen-(Meth)acrylsäure-Copolymere. Ganz besonders bevorzugt sind Ethylen-Vinylacteat-Copolymere und funktionalisierte Ethylen-Vinylacetat-Copolymere, insbesondere Ethylen-Vinylacteat-Copolymere, die keine weiteren Monomereinheiten einpolymerisiert enthalten (reine Ethylen-Vinylacteat-Copolymere).

Thermisch expandierbare Zubereitungen, die mindestens ein Ethylen-Vinylacetat-Copolymer mit einem Vinylacetatanteil von 5 bis 30 Gew.-%, insbesondere von 10 bis 25 Gew.-%, ganz besonders von 15 bis 20 Gew.-%, bezogen auf die Gesamtmasse der Copolymere, enthalten, sind erfindungsgemäß besonders bevorzugt.

Weiterhin hat es sich als vorteilhaft erwiesen, wenn die thermisch expandierbare Zubereitung ein peroxidisch vernetzbares Polymer a), insbesondere ein Ethylen-Vinylacetat-Copoylmer, mit einem Schmelzindex von 0,3 bis 400 g/10min, insbesondere von 0,5 bis 45 g/10min, enthält. Peroxidisch vernetzbare Polymere a), insbesondere Ethylen-Vinylacetat-Copolymere, mit einem Schmelzindex von 1,5 bis 25 g/10min, insbesondere von 2 bis 10 g/10 min, ganz besonders von 2 bis 8 g/10min sind besonders vorteilhaft. Es kann erfindungsgemäß vorteilhaft sein, wenn zwei oder mehrere Polymere mit verschiedenen Schmelzindices in den thermisch expandierbaren Zubereitungen eingesetzt werden.

Der Schmelzindex wird hierfür in einem Kapillarrheometer bestimmt, wobei das Polymer bei 190°C in einem beheizbaren Zylinder aufgeschmolzen und unter einem durch die Auflagelast (2,16kg) entstehenden Druck durch eine definierte Düse (Kapillare) gedrückt wird (ASTM D1238). Ermittelt wird die austretende Masse als Funktion der Zeit.

In einer bevorzugten Ausführungsform, wie für Niedertemperatur-expandierende Formulierungen, weisen die Polymere a) einen Schmelzpunkt (bestimmbar mittels DSC nach ASTM D3417) unterhalb der Zersetzungstemperatur des endothermen Treibmittels auf. Bevorzugt weist das Polymer a) einen Schmelzpunkt unterhalb von 100 °C, bevorzugt zwischen 90 und 60 °C auf.

Die thermisch expandierbaren Zubereitungen enthalten vorzugsweise mindestens 30 Gew.-% und bevorzugt maximal 80 Gew.-%, insbesondere maximal 70 Gew.-% mindestens eines peroxidisch vernetzbaren Polymers a), welches nicht Glycidyl(meth)acrylat als Monomer einpolymerisiert enthält, insbesondere mindestens eines Ethylen-Vinylacetat-Copolymers. Thermisch expandierbare Zubereitungen, die 30 bis 80 Gew.-%, insbesondere 40 bis 70 Gew.-%, bevorzugt 45 bis 65 Gew.-% mindestens eines peroxidisch vernetzbaren Polymers a), jeweils bezogen auf die Gesamtmasse der thermisch expandierbaren Zubereitung enthalten, sind besonders bevorzugt.

Als weiterer Bestandteil neben den peroxidisch vernetzbaren Polymeren a), welche nicht Glycidyl(meth)acrylat als Monomer einpolymerisiert enthalten, enthalten die thermisch expandierbaren Zusammensetzungen mindestens ein Polymer b), welches zu einem Anteil von 2 bis 20 Gew.-%, bezogen auf das jeweilige Polymer, Glycidyl(meth)acrylat als Monomer einpolymerisiert enthält. Der Glycidyl(meth)acrylat am Polymer b) beträgt 2 bis 20 Gew.-%, insbesondere 3 bis 15 Gew.-%, bevorzugt 6 bis 10 Gew.-%, bezogen auf die Gesamtmasse der Copolymere. Bevorzugt enthalten die Polymere b) Glycidylmethacrylat.

Als Polymere b) eignen sich die oben beschriebenen peroxidisch vernetzbaren Polymere, wobei die Polymere b) Glycidyl(meth)acrylat als Einheit enthalten. Besonders bevorzugt sind Terpolymere, die neben Glycidyl(meth)acrylat als Einheit bevorzugt Monomere ausgewählt aus der Gruppe von Ethylen, Propylen, Acrylsäureester, wie bevorzugt Methyl(meth)acrylat, Ethyl(meth)acrylat, Propyl(meth)acrylat oder Butyl(meth)acrylat, Styrol und Vinylacetat enthalten. Ganz besonders bevorzugt sind Ethylen/(Meth)Acrylsäureester/Glycidyl(meth)acrylat-Terpolymere, insbesondere Ethylen/Methyl(meth)acrylat/Glycidylmethacrylat und Ethylen/Butyl(meth)acrylat/Glycidylmethacrylat.

Weiterhin hat es sich als vorteilhaft erwiesen, wenn der Schmelzindex des Polymers b), insbesondere des Terpolymers, von 0,3 bis 400 g/10min, insbesondere von 0,5 bis 45 g/10min ist. Polymere b), insbesondere Terpolymere, mit einem Schmelzindex von 1,5 bis 25 g/10min, insbesondere von 2 bis 15 g/10 min, sind besonders vorteilhaft.

In einer bevorzugten Ausführungsform, wie für Niedertemperatur-expandierende Formulierungen, weisen die Polymere b) einen Schmelzpunkt (bestimmbar mittels DSC nach ASTM D3417) unterhalb der Zersetzungstemperatur des endothermen Treibmittels auf. Bevorzugt weist das Polymer b) einen Schmelzpunkt unterhalb von 100 °C, bevorzugt zwischen 90 und 60 °C, bevorzugt zwischen 80 und 65 °C auf.

Es kann erfindungsgemäß vorteilhaft sein, wenn zwei oder mehrere, insbesondere zwei verschiedene Polymere b) in den thermisch expandierbaren Zubereitungen eingesetzt werden. Vor allem für die Verbesserung der geringen Wasserabsorption sind zwei verschiedene Terpolymere b) von Vorteil. Bevorzugt sind ein Ethylen/Methyl(meth)acrylat/Glycidylmethacrylat und ein Ethylen/Butyl(meth)acrylat/Glycidylmethacrylat enthalten.

Die thermisch expandierbaren Zubereitungen enthalten vorzugsweise mindestens 2 Gew.-% und bevorzugt maximal 40 Gew.-%, insbesondere maximal 20 Gew.-% mindestens eines Polymers b), welches zu einem Anteil von 2 bis 20 Gew.-%, bezogen auf das jeweilige Polymer, Glycidylmethacrylat als Monomer einpolymerisiert enthält, insbesondere mindestens eines Terpolymers. Thermisch expandierbare Zubereitungen, die 2 bis 40 Gew.-%, insbesondere 5 bis 25 Gew.-%, bevorzugt 7,5 bis 20 Gew.-% mindestens eines peroxidisch vernetzbaren Polymers b), jeweils bezogen auf die Gesamtmasse der thermisch expandierbaren Zubereitung enthalten, sind besonders bevorzugt.

Als weiterer Bestandteil neben den peroxidisch vernetzbaren Polymeren können die thermisch expandierbaren Zubereitungen vorzugsweise mindestens ein niedermolekulares multifunktionelles Acrylat enthalten.

Unter einem "niedermolekularen multifunktionellen Acrylat" wird eine Verbindung verstanden, die mindestens zwei Acrylatgruppen aufweist und ein Molgewicht unterhalb von 2400g/mol, vorzugsweise unterhalb von 800g/mol, aufweist. Als vorteilhaft haben sich insbesondere derartige Verbindungen erwiesen, die zwei, drei oder mehr Acrylatgruppen pro Molekül aufweisen. Bevorzugte difunktionelle Acrylate sind Ethylenglycol-Dimethacrylat, Diethylenglycol-Dimethacrylat, Triethlenglycol-Dimethacrylat, Triethlenglycol-Diacrylat, Tripropyleneglycol-Dimethacrylat, 1,4-Butandiol-Dimethacrylat, 1,3 Butylenglycol-Dimethacrylat, 1,3-Butandiol-Dimethacrylat, Tricyclodecandimethanol-Dimethacrylat, 1,10-Dodecandiol-Dimethacrylat, 1,6-Hexandiol-Dimethacrylat, 2-Methyl-1,8-octandiol-Dimethacrylat, 1,9-Nonandiol-Dimethacrylat, Neopentylglycol-Dimethacrylat und Polybutylenglycol-Dimethacrylat.

Bevorzugte niedermolekulare Acrylate mit drei oder mehr Acrylatgruppen sind Glycerintriacrylat, Di-pentaerythritol-Hexaacrylat, Pentaerythritol-Triacrylat (TMM), Tetramethylolmethan- Tetraacrylat (TMMT), Trimethylolpropan-Triacrylat (TMPTA), Pentaerythritol-Trimethacrylat, Di-(Trimethylolpropan)-Tetraacrylat (TMPA), Pentaerythritol-Tetraacrylat, TrimethylolpropanTrimethacrylat (TMPTMA), Tri(2-acryloxyethyl)isocyanurat und Tri(2- methacryloxyethyl)trimellitat sowie deren ethoxylierten und propoxylierten Derivate mit einem Gehalt von maximal 35-EO-Einheiten und/oder maximal 20-PO-Einheiten.

Thermisch expandierbare Zubereitung die ein niedermolekulares multifunktionelles Acrylat ausgewählt aus Triethylenglykoldiacrylat, Triethlenglycol-Dimethacrylat, Trimethylolpropantriacrylat (TMPTA) und Trimethylolpropantrimethacrylat (TMPTMA), Pentaerythritol-Triacrylat (TMM), Tetramethylolmethan- Tetraacrylat (TMMT), Pentaerythritol-Trimethacrylat, Di-(Trimethylolpropan)-Tetraacrylat (TMPA) und Pentaerythritol-Tetraacrylat enthalten, sind erfindungsgemäß ganz besonders bevorzugt.

Neben den niedermolekularen Acrylaten können die thermisch expandierbaren Zubereitungen weitere Covernetzer, wie beispielsweise Allylverbindungen, wie Triallyl-cyanurat, Triallylisocyanurat, Triallyl-trimesat, Triallyl-trimellitat (TATM), Tetraallyl-pyromellitat, den Diallylester von 1,1,3-Trimethyl-5-carboxy-3-(4-carboxyphenyl)inden, Trimethylolpropan-trimellitat (TMPTM) oder Phenylen-dimaleimide enthalten.

Dabei hat es sich als besonders vorteilhaft erwiesen, wenn die thermisch expandierbaren Zubereitungen mindestens ein niedermolekulares multifunktionelles Acrylat ausgewählt aus Triethylenglykoldiacrylat, Trimethylolpropantriacrylat (TMPTA) und Trimethylolpropantrimethacrylat (TMPTMA) enthalten.

Die Co-Vernetzer, bevorzugt die niedermolekularen multifunktionellen Acrylate sind in den thermisch expandierbaren Zubereitungen vorzugsweise in einer Menge von 0,2 bis 2,5 Gew.-%, insbesondere von 0,4 bis 1,4 Gew.-%, jeweils bezogen auf die Gesamtmasse der thermisch expandierbaren Zubereitung enthalten.

Als Härtersystem für die peroxidisch vernetzbares Polymere enthalten die thermisch expandierbaren Zubereitungen mindestens ein Peroxid. Insbesondere sind die organischen Peroxide geeignet, wie beispielsweise Ketonperoxide, Diacylperoxide, Perester, Perketale und Hydroperoxide bevorzugt. Besonders bevorzugt sind beispielsweise Cumenhydroperoxid, t-Butylperoxid, Bis(tert-butylperoxy)-diisopropylbenzol, Di(tert-butylperoxyisopropyl)benzol, Dicumylperoxid, t-Butylperoxybenzoat, Di-alkylperoxydicarbonat, Diperoxyketale (z.B. 1,1-Di-tert-butylperoxy-3,3,5-trimethylcyclohexan), Ketonperoxide (z.B. Methylethylketon-Peroxide), 4,4- Ditert-butylperoxy-n-butyl-valerate und Trioxepane (z.B. 3,3,5,7,7-Pentamethyl-1,2,4-trioxepan).

Besonders bevorzugt sind die beispielsweise kommerziell von der Firma Akzo Nobel bzw. Pergan vertriebenen Peroxide, wie 3,3,5,7,7-Pentamethyl-1,2,4-trioxepan, 2,5-Dimethyl-2,5-di(tert.-butylperoxy)hexan, Di-tert.-butylperoxid, 2,5-Dimethyl-2,5-di(tert.-butylperoxy)hexan, tert.-Butylcumylperoxid, Di-(2-tert.-butylperoxyisopropyl)benzol, Dicumylperoxid, Butyl-4,4-di(tert.-butylperoxi)valerat, tert-Butylperoxy-2-ethylhexylcarbonat, 1,1-Di-(tert.-butylperoxy)-3,3,5-trimethylcyclohexan, tert.-Butylperoxybenzoat, Di-(4-methylbenzoyl)peroxid und Dibenzoylperoxid.

Es hat sich weiterhin als vorteilhaft erwiesen, wenn die eingesetzten Peroxide bei Raumtemperatur im Wesentlichen inert sind und erst bei Erhitzung auf höhere Temperaturen aktiviert werden (beispielsweise bei Erhitzung auf Temperaturen zwischen 130°C und 240°C). Besonders vorteilhaft ist es, wenn das eingesetzte Peroxid bei 65°C eine Halbwertszeit von mehr als 60 Minuten aufweist, dass heißt, dass nach einer Erhitzung der thermisch expandierbaren Zubereitung enthaltend das Peroxid auf 65°C für 60 Minuten sich weniger als die Hälfte des eingesetzten Peroxids zersetzt hat. Erfindungsgemäß können solche Peroxide besonders bevorzugt sein, die bei 115°C, insbesondere 130°C eine Halbwertszeit von 60 Minuten aufweisen.

Besonders bevorzugt ist mindestens ein Peroxid ausgewählt aus der Gruppe aus Di(tert.-butylperoxyisopropyl)benzol, Dicumylperoxid, 1,1-Di-(tert.-butylperoxy)-3,3,5-trimethylcyclohexan, 2,5-Dimethyl-2,5-di(tert.-butylperoxy)hexan, Dibenzoylperoxid und Di-tert.-butyl- 1,1,4,4-tetramethylbut-2-in-1,4-ylendiperoxid enthalten.

Ferner ist es erfindungsgemäß vorteilhaft, wenn mindestens ein oder die Peroxide in einer auf einen festen inerten Träger, wie beispielsweise Calciumcarbonat und/oder Silica und/oder Kaolin, aufgebrachten Form eingesetzt werden.

Vorzugsweise wird das Peroxid so ausgewählt, dass die Vernetzungstemperatur T90 unterhalb, vorzugsweise 15 - 35 °C unterhalb der Zersetzungstemperatur eines der enthaltenen endothermen Treibmittel liegt. Dadurch werden eine hohe Gasausbeute und damit eine hohe Expansion des Materials begünstigt. Beispielhafte Ausführungen wären ein Peroxid (T90 = 105 °C) mit Natriumbicarbonat Start- Zersetzungstemperatur 130 °C oder ein Peroxid (T90 = 170 °C) mit Zitronensäure Start-Zersetzungstemperatur 195 °C. Die Vernetzungstemperatur T90 definiert sich als die Temperatur, bei der eine 90%ige Vernetzung des Materials innerhalb von 12 Minuten erreicht wird.

Die Zersetzungstemperatur des endothermen Treibmittels gibt die Temperatur an, bei der sich das endotherme Treibmittel beginnt zu zersetzen, welche auch als Aktivierungstemperatur bezeichnet werden kann. Die Vernetzungstemperatur T90 definiert sich als die Temperatur, bei der eine 90%ige Vernetzung des Materials innerhalb von 12 Minuten erreicht wird. Die Vernetzungstemperatur T90 und der Vernetzungsgrad können mittels einer Rheometermessung bestimmt werden, wie mit einem Monsanto-Rheometer 100 S (Prinzip oszillierende Scheibe bei einem Auslenkwinkel von

3°, ca. 15 cm$^3$ Kammervolumen) nach DIN 53529.

Das mindestens eine oder die Peroxide sind in den erfindungsgemäßen thermisch expandierbaren Zubereitungen vorzugsweise in einer Menge von 0,1 bis 4 Gew.-%, bevorzugt in einer Menge von 0,2 bis 2 Gew.-%, insbesondere in einer Menge von 0,5 bis 1,3 Gew.-%, jeweils bestimmt als Aktivsubstanzgehalt an Peroxid bezogen auf die Gesamtmasse der thermisch expandierbaren Zubereitung, enthalten.

Neben den oben genannten Bestandteilen können die thermisch expandierbaren Massen noch weitere übliche Komponenten, wie beispielsweise Füllstoffe, Weichmacher, Reaktivverdünner, Rheologie-Hilfsmittel, Netzmittel, Haftvermittler, Alterungsschutzmittel, Stabilisatoren und/oder Farbpigmente enthalten.

Beispiele für geeignete Weichmacher sind Alkylester zweibasiger Säuren (z. B. Phthalat-Ester, Adipinsäurepolyester), technische Weiß- und Prozessöle (Paraffine), Diarylether, Benzoate von Polyalkylenglykolen, Citronensäureester (z.B. Citronensäuretriethylester), organische Phosphate und Alkylsulfonsäureester von Phenol oder Kresol.

Als Füllstoffe kommen beispielsweise die diversen gemahlenen oder gefällten Kreiden, Calcium-Magnesiumcarbonate, Talkum, Graphit, Schwerspat, Kieselsäuren oder Silica sowie insbesondere silikatische Füllstoffe, wie beispielsweise Glimmer, etwa in Form von Chlorit, oder silikatische Füllstoffe vom Typ des Aluminium-Magnesium-Calcium-Silicats, z. B. Wollastonit, in Frage. Talkum ist ein besonders bevorzugter Füllstoff. Bevorzugt sind die Füllstoffe beschichtet, vorzugsweise mit Stearinsäure oder Stearaten. Dadurch wird das Rieselverhalten positiv beeinflusst.

Die Füllstoffe werden vorzugsweise in einer Menge von 0 bis 60 Gew.-%, insbesondere von 0 bis 50 Gew.-%, bevorzugt 0,1 bis 40 Gew.-%, besonders bevorzugt 1 bis 30 Gew.-% jeweils bezogen auf die Masse der gesamten thermisch expandierbaren Zusammensetzung eingesetzt. Farbgebende Komponenten, insbesondere schwarze Farbstoffe auf Basis von Graphit und/oder Ruß, sind in den erfindungsgemäßen thermisch expandierbaren Zusammensetzungen vorzugsweise in einer Menge von 0 bis 2 Gew.-%, insbesondere von 0,1 bis 0,8 Gew.-%, ganz besonders bevorzugt 0,15 bis 0,5 Gew.-%, jeweils bezogen auf die Masse der gesamten thermisch expandierbaren Zusammensetzung enthalten.

Als Antioxidantien oder Stabilisatoren können beispielsweise sterisch gehinderte Phenole bzw. Mischungen davon und/oder sterisch gehinderte Thioether und/oder sterisch gehinderte aromatische Amine, Diphosphonite, Disulfide eingesetzt werden, wie beispielsweise Bis-(3,3-bis-(4'-hydroxy-3-tert. butylphenyl) butansäure)-glykolester oder auch 4-Methylphenol, Reaktionsprodukt mit Dicyclopentadien und Isobutylen (Wingstay L).

Antioxidantien oder Stabilisatoren sind in den erfindungsgemäßen thermisch expandierbaren Zusammensetzungen vorzugsweise in einer Menge von 0 bis 4 Gew.-%, insbesondere von 0,1 bis 1,5 Gew.-%, bevorzugt von 0,1 bis 0,5 Gew.-%, jeweils bezogen auf die Masse der gesamten thermisch expandierbaren Zusammensetzung enthalten.

Trockenmittel wie Calciumoxid und/oder Zeolithe sind in den erfindungsgemäßen thermisch expandierbaren Zusammensetzungen vorzugsweise in einer Menge von 0 - 5 Gew.-%, insbesondere von 0,1 bis 2,5 Gew.-%, jeweils bezogen auf die Masse der gesamten thermisch expandierbaren Zusammensetzung enthalten.

Die erfindungsgemäßen thermisch expandierbaren Zusammensetzungen sind vorzugsweise derart formuliert, dass sie bei 22°C fest sind. Eine thermisch expandierbare Zusammensetzung wird erfindungsgemäß als "fest" bezeichnet, wenn die Geometrie dieser Zusammensetzung sich bei der angegebenen Temperatur innerhalb von 1 Stunde, insbesondere innerhalb von 24 Stunden, nicht unter dem Einfluss der Schwerkraft verformt.

Die erfindungsgemäßen thermisch expandierbaren Zusammensetzungen können durch Mischung der ausgewählten Komponenten in einem beliebigen, geeigneten Mischer, wie beispielsweise einem Kneter, einem Doppel-Z-Kneter, einem Innenmischer, einem Doppelschneckenmischer, einem kontinuierlichen Mischer oder einem Extruder, insbesondere einem Doppelschneckenextruder, hergestellt werden.

Obwohl es vorteilhaft sein kann die Komponenten etwas zu erhitzen, um die Erreichung einer homogenen, einheitlichen Masse zu erleichtern, muss dafür Sorge getragen werden, dass keine Temperaturen erreicht werden, die eine Aktivierung der Härter, der Beschleuniger und/oder des Treibmittels bewirken. Die resultierende thermisch expandierbare Zusammensetzung kann unmittelbar nach ihrer Herstellung in Form gebracht werden, beispielsweise durch Blasformen, Pelletierung, Spritzgussverfahren, Formpressverfahren, Stanzverfahren oder Extrusion.

Die Expansion der thermisch expandierbaren Zusammensetzung erfolgt durch Erhitzung, wobei die Zusammensetzung für eine bestimmte Zeit auf eine bestimmte Temperatur erhitzt wird, die ausreichend ist, um die Aktivierung des Treibmittels zu bewirken. In Abhängigkeit von der Zusammensetzung der Zusammensetzung und den Bedingungen der Fertigungslinie liegen derartige Temperaturen üblicherweise im Bereich von 110°C bis 240°C, vorzugsweise 120°C bis 210°C, mit einer Verweilzeit von 10 bis 90 Minuten, vorzugsweise von 5 bis 60 Minuten.

Im Bereich des Fahrzeugbaus ist es besonders vorteilhaft, wenn die Expansion der erfindungsgemäßen Zusammensetzungen während der Passage des Fahrzeugs durch den Ofen zur Aushärtung der kathodischen Tauchlackierung erfolgt, so dass auf einen separaten Erhitzungsschritt verzichtet werden kann.

Die thermisch expandierbaren Zusammensetzungen der vorliegenden Erfindung können in einem weiten Bereich von Stütz-, Füll-, Dichtungs- und Klebstoffapplikationen zum Einsatz kommen, beispielsweise im Bereich der Schottteile zur Abdichtung von Hohlräumen in Fahrzeugen. Aber auch ein Einsatz als Unterfütterungsklebstoff, beispielsweise im Tür oder Dachbereich ist denkbar. Für einen derartigen Einsatzzweck können die erfindungsgemäßen thermisch expandierbaren Zusammensetzungen mittels Direktextrusion appliziert werden. Die Zusammensetzungen können aber auch in extrudierter Form an den Anwendungsort gebracht werden und dort durch Erwärmen des Stahls aufgepresst und angeschmolzen werden. Als dritte Alternative ist auch das Aufbringen als Co-Extrudat denkbar. Bei dieser Ausführungsform wird erfindungsgemäß unter das eigentliche nicht klebrige Formteil aus der erfindungsgemäßen thermisch expandierbaren Zusammensetzung eine zweite klebrige Zusammensetzung in einer dünnen Schicht aufgebracht. Diese zweite klebrige Schicht dient im Rahmen dieser Ausführungsform dazu, das Formteil im Rohbau zu fixieren.

Die thermisch expandierbaren Zusammensetzungen sind dementsprechend besonders für die Herstellung von Formkörpern, insbesondere Schotteilen zur Hohlraumabdichtung geeignet, d.h. zur Herstellung von Teilen, die in die Hohlräume von Fahrzeugen eingesetzt werden, anschließend durch Erhitzung expandieren und gleichzeitig aushärten und auf diese Weise den Hohlraum möglichst vollständig abdichten.

Ein zweiter Gegenstand der vorliegenden Erfindung ist dementsprechend ein Formkörper, der eine erfindungsgemäße thermisch expandierbare Zusammensetzung aufweist. Dabei kann es sich beispielsweise um ein Schottteil zum Abdichten von Hohlräumen eines Bauteils, das eine Form aufweist, die an den Hohlraum angepasst ist, handeln.

Unter einer "Form, die an den Hohlraum angepasst ist" werden dabei erfindungsgemäß alle Geometrien von Schottteilen verstanden, die nach der Expansion eine vollständige Abdichtung des Hohlraums sicherstellen. Dabei kann die Form des Schottteils individuell der Form des Hohlraums nachempfunden sein und entsprechende Spitzen und/oder Rundungen aufweisen; im Falle der erfindungsgemäßen thermisch expandierbaren Zusammensetzungen mit hohen Expansionsgraden, kann aber auch das Einbringen einer entsprechend großen Menge in variabler Form, beispielsweise in Form einer Raupe oder eines abgelängten Strangs des Materials, in den Hohlraum ausreichen, um nach der Expansion eine vollständige Abdichtung des Hohlraums zu gewährleisten.

Derartige Schottteile werden aus den erfindungsgemäßen thermisch expandierbaren Zusammensetzungen üblicherweise durch Spritzgusstechniken hergestellt. Dabei werden die thermisch expandierbaren Zusammensetzungen auf Temperaturen im Bereich von 70 bis 120°C erhitzt und dann in eine entsprechend ausgebildete Form injiziert.

Die erfindungsgemäßen Formkörper können in allen Produkten zum Einsatz kommen, die Hohlräume aufweisen. Dies sind neben den Fahrzeugen beispielsweise auch Flugzeuge, Schienenfahrzeuge, Haushaltsgeräte, Möbel, Gebäude, Wände, Abtrennungen oder auch Boote.

Ein weiterer Gegenstand der vorliegenden Erfindung ist ein Verfahren zum Abdichten und Füllen von Hohlräumen in Bauteilen, zum Verstärken oder Versteifen von Bauteilen, insbesondere hohlen Bauteilen, und zum Verkleben von beweglichen Bauteilen unter Verwendung der hierin beschriebenen Zusammensetzungen und Formkörper. Vorzugsweise ist das Verfahren ein Verfahren zur Abdichtung von Hohlräumen eines Bauteils, wobei ein erfindungsgemäßes Schottteil in den Hohlraum eingebracht wird und anschließend auf eine Temperatur oberhalb von 110°C erhitzt wird, so dass die thermisch expandierbare Zusammensetzung expandiert und den Hohlraum abdichtet.

Ein weiterer Gegenstand der vorliegenden Erfindung ist die Verwendung eines erfindungsgemäßen Formkörpers oder Schottteils zur akustischen Abdichtung von Hohlräumen in Bauteilen und/oder zur Abdichtung von Hohlräumen in Bauteilen gegen Wasser und/oder Feuchtigkeit.

Noch ein weiterer Gegenstand der vorliegenden Erfindung ist die Verwendung eines erfindungsgemäßen Formkörpers zum Verstärken oder Versteifen von Bauteilen, insbesondere hohlen Bauteilen.

Die nachfolgenden Beispiele sollen die Erfindung näher erläutern, wobei die Auswahl der Beispiele keine Beschränkung des Umfanges des Erfindungsgegenstandes darstellen soll. Bei den Zusammensetzungen sind alle Mengenangaben Gewichtsteile, wenn nicht anders angegeben.

Ausführunqsbeispiele

Allgemeine Versuchsdurchführunq / Herstellung der Formulierungen:

Zur Herstellung der erfindungsgemäßen thermisch expandierbaren Zubereitungen wurden die enthaltenen Polymere bei RT im Kneter bzw. wenn notwendig unter Erwärmung auf bis zu 150 °C mit Füllstoffen zu einem homogenen Teig verarbeitet. Nacheinander wurden dann die weiteren nicht reaktiven Komponenten wie Füllstoffe, Russ, Stabilisatoren und Weichmacher, falls vorhanden, zugegeben und weitergeknetet bis die Formulierung glatt ist. Bei unter 70 °C wurden dann alle reaktiven Komponenten wie z.B. Beschleuniger, Peroxide, Aktivatoren und Katalysatoren, Zinkoxid, Calciumoxid und Treibmittel zugegeben und langsam untergeknetet bis der Klebstoff homogen gemischt ist. Dabei wurden die Treibmittel teilweise als Masterbatch eingesetzt.

Bestimmung der Expansion

Zur Bestimmung der Expansion wurden aus den gefertigten Platten der Beispielformulierungen Prüfkörper mit den Dimensionen ca. 20mm x 20mm x 3mm geschnitten, diese in einen Umluftofen eingeführt, dieser auf die in den Tabellen genannten Temperaturen erhitzt (Aufheizzeit ca. 7 bis 10 min) und die Prüfkörper dann für den in den Tabellen genannten Zeitraum bei dieser Temperatur belassen (Aufheizzeit inklusive). Die Expansion bei 175°C entspricht dabei den idealen Bedingungen, die im Rahmen der Aushärtung im Fahrzeugbau erzielt werden. Die Expansion bei 160°C simuliert die Unterbrandbedingungen, die Expansion bei 200°C die Überbrandbedingungen.

Das Ausmaß der Expansion [%] wurde mittels der Wasserverdrängungsmethode nach der Formel

$$Expansion = \frac{(m2 - m1)}{m1} \times 100$$

m1 = Masse des Prüfkörpers im Originalzustand in deionisiertem Wasser
m2 = Masse des Prüfkörpers nach Einbrand in deionisiertem Wasser ermittelt.

Bestimmung der Wasseraufnahme

Zur Bestimmung der Wasseraufnahme wurden Prüfkörper der Dimension von ca. 20mm x 20 mm x 3 mm analog der Methode zur Bestimmung der Expansion hergestellt und im Umluftofen bei vorgegebenen Temperaturen analog der Methode zur Bestimmung der Expansion, wie in den Tabellen angegeben, expandiert und ausgehärtet. Anschließend wurden die so expandierten Prüfkörper 24 h bei Normklima (23 °C, 50 % r.F.) konditioniert; nach der Konditionierung erfolgte direkt die Massenbestimmung m.

Zur Lagerung im Wasserbad wurden die Prüfkörper in einem mit Wasser befüllten Behälter ca. 5-10 cm unter der Wasseroberfläche 24 h bei 23 °C gehalten. Nach der Entnahme wurden die Prüfkörper abgetropft, mit einem saugfähigen Tuch oberflächlich getrocknet und erneut gewogen $m_0$. Anschließend werden die Prüfkörper erneut für 24 h bei Normklima (23 °C, 50 % r.F.) gelagert und erneut gewogen $m_{24}$.

Die Berechnung der Wasseraufnahme [Gew.-%] erfolgte nach folgender Gleichung:

$$Wasseraufnahme = \frac{m_i - m}{m} \times 100$$

m: Masse des Prüfkörpers vor der Wasserlagerung im Tauchbad
$m_i$: Masse des Prüfkörpers nach der Wasserlagerung im Tauchbad nach der Zeit i.

i = 0: Messung direkt nach Entnahme
i = 24: Messung nach 24 h im Normklima (23 °C, 50 % r.F.)

**Beispielformulierung (EVA basiert, Peroxid-vernetzend)**

| Stoffbezeichnung / -gruppe (generische Namen) | Vergleichsrezeptur 1 | Vergleichsrezeptur 2 | Erfindungsgemäße Rezeptur 1 | Erfindungsgemäße Rezeptur 2 | Erfindungsgemäße Rezeptur 3 |
|---|---|---|---|---|---|
| EVA-Polymer 1 | 63,45 | 67,2 | 43,7 | 53,7 | 51,70 |
| Terpolymer 1 | | | 15,00 | 10,00 | 10,00 |
| Terpolmyer 2 | | | | | 2,00 |
| Zitronensäure | 17,50 | 15,00 | 20,00 | 17,50 | 17,50 |
| NaHCO$_3$ | 3,50 | 3,00 | 4,00 | 3,50 | 3,50 |
| Talkum | 5,25 | 4,50 | 6,00 | 5,25 | 5,25 |
| EVA Polymer 2 | 8,75 | 7,50 | 10,00 | 8,75 | 8,75 |
| Peroxid 1 | | | | | |
| Peroxid 2 | 1,25 | 2,5 | 1,00 | 1,00 | 1,00 |
| Antioxidans | 0,3 | 0,3 | 0,3 | 0,3 | 0,30 |
| Prozessöl | | | | | |
| Co-Vernetzer | | | | | |
| **SUMME** | 100 | 100 | 100 | 100 | 100 |
| | | | | | |
| Expansion | | | | | |
| 20min, 160 °C | 278 | 416 | 554 | 666 | 511 |
| 25min, 175°C | 510 | 487 | 659 | 676 | 656 |
| 40min, 200°C | 380 | 325 | 928 | 938 | 962 |
| | | | | | |
| Wasseraufnahme direkt nach Entnahme in % | | | | | |
| 20min, 160°C | 9,8 | 11,6 | 4,9 | 4,9 | 6,0 |
| 25min, 175°C | 7,6 | 9,2 | 5,0 | 5,0 | 4,5 |

EP 3 207 092 B1

(fortgesetzt)

| Wasseraufnahme nach 24h in % | | | | | |
|---|---|---|---|---|---|
| 20min, 160°C | 0,8 | 0,7 | 0,3 | 0,1 | 0,0 |
| 25min, 175°C | 1,1 | 1,2 | 0,2 | 0,0 | 0,0 |

**Beispielformulierung (EVA basiert, Peroxid-vernetzend)**

| Stoffbezeichnung / -gruppe (generische Namen) | Erfindungsgemäße Rezeptur 4 | Erfindungsgemäße Rezeptur 5 | Erfindungsgemäße Rezeptur 6 | Erfindungsgemäße Rezeptur 7 | Erfindungsgemäße Rezeptur 8 |
|---|---|---|---|---|---|
| EVA-Polymer 1 | 51,20 | 48,70 | 46,20 | 49,70 | 51,90 |
| Terpolymer 1 | 10,00 | 10,00 | 10,00 | 9,50 | 10,00 |
| Terpolmyer 2 | 2,00 | 2,50 | 5,00 | 7,50 | 2,00 |
| Zitronensäure | 17,50 | 17,50 | 17,50 | 17,50 | 17,50 |
| NaHCO$_3$ | 3,50 | 3,50 | 3,50 | 3,50 | 3,50 |
| Talkum | 5,25 | 5,25 | 5,25 | 5,25 | 5,25 |
| EVA Polymer 2 | 8,75 | 8,75 | 8,75 | 8,75 | 8,75 |
| Peroxid | | | | | 0,20 |
| Peroxid | 1,00 | 1,00 | 1,00 | 1,00 | 0,60 |
| Antioxidans | 0,30 | 0,30 | 0,30 | 0,30 | 0,30 |
| Prozessöl | | | | 1,00 | |
| Co-Vernetzer | | | | 1,50 | |
| **SUMME** | 100 | 100 | 100 | 100 | 100 |
| | | | | | |
| Expansion | | | | | |
| 20min, 160 °C | 529 | 488 | 497 | 474 | 527 |
| 25min, 175°C | 668 | 646 | 634 | 632 | 667 |
| 40min, 200°C | 981 | 989 | 945 | 932 | 990 |
| | | | | | |
| Wasseraufnahme direkt nach Entnahme in % | | | | | |
| 20min, 160°C | 3,6 | 4,7 | 4,1 | 4,1 | 4,8 |
| 25min, 175°C | 3,9 | 2,7 | 5,1 | 4,1 | 4,0 |

(fortgesetzt)

| Wasseraufnahme nach 24h in % | | | | | |
|---|---|---|---|---|---|
| 20min, 160°C | 0,0 | 0,0 | 0,3 | 0,1 | 0,0 |
| 25min, 175°C | 0,0 | 0,0 | 0,0 | 0,4 | 0,0 |

EP 3 207 092 B1

13

Eingesetzte Komponenten:

| EVA Polymer 1 | | EVA, 16,5-19,5 %VA-Gehalt, Schmelzpunkt 82-90 °C, MFI 1 ,5-6 g/10min (190 °C, 2.16 kg)) |
|---|---|---|
| Terpolymer 1 | | Terpolymer (GMA/EBA), reaktives Ethylen Terpolymer, 9 Gew.% Glycidylmethacrylat, 20 Gew.% Butylacrylat, Schmelzpunkt 72 °C, MFI 8 g/10min (190 °C, 2.16 kg)) |
| Terpolymer 2 | | Ethylen-Acrylsäureester- Glycidylmethacrylat Terpolymer, Methylacrylatgehalt 24 Gew.%, Glycidylmethacrylatgehalt 8 Gew.%, Schmelzpunkt 65 °C, MFI 6 g/10min (190 °C, 2.16 kg) |
| masterbatch | Zitronensäure | Zitronensäure, Zersetzungstemperatur > 150 °C (TGA Messung) |
| | $NaHCO_3$ | $NaHCO_3$, Zersetzungstemperatur > 120 °C (TGA Messung) |
| | Talkum | Talkum |
| | EVA Polymer 2 | EVA (17-19 %VA, Schmelzpunkt 85-89°C, MFI ca. 1,5-4 g/10min190 °C, 2.16 kg)) |
| Peroxid 1 | | Di-(2-tert.-butyl-peroxyisopropyl)-benzol, 95% Peroxid, 8.98% Aktivsauerstoffgehalt, Halbwertszeittemperatur 1h = 146 °C, t90 = 175 °C (Rheometer t90 about 12 min) |
| Peroxid 2 | | 2,5-Dimethyl-2,5-di-(tert.-butylperoxy)-hexan, 45% Peroxid, Pulver mit Kreide, 4 . 96% Aktivsauerstoffgehalt, Halbwertszeittemperatur 1h = 147 °C, t90 = 175 °C (Rheometer t90 about 12 min) |
| Antioxidans | | Bis[3,3-bis-(4'-hydroxy-3'-tert-butylphenyl)butanoicacid]-glycol ester, Molekulargewicht 794 g/mol, Schmelzpunkt 167-171 °C |
| Prozessöl | | Paraffinprozessöl, pour point 18 °C, kinematische Viskosität, 3000 mm$^2$/s at 40 °C |
| Co-Vernetzer | | Trimethylolpropan trimethacrylat, TMPTMA, |

Die erfindungsgemäßen Versuche zeigen eine geringe Wasserabsorption, vor allem die Beispiele mit zwei Terpolymeren. Gleichzeitig konnten die Ergebnisse hinsichtlich des Expansionsverhaltens verbessert werden.

**Patentansprüche**

1. Thermisch expandierbare Zusammensetzung, enthaltend

   a) mindestens ein peroxidisch vernetzendes Polymer, welches nicht Glycidyl(meth)acrylat als Monomer einpolymerisiert enthält,
   b) mindestens ein Polymer, welches zu einem Anteil von 2 bis 20 Gew.-%, bezogen auf das jeweilige Polymer, Glycidyl(meth)acrylat als Monomer einpolymerisiert enthält,
   c) mindestens ein Peroxid und
   d) mindestens ein endothermes chemisches Treibmittel.

2. Thermisch expandierbare Zusammensetzung nach Anspruch 1, **dadurch gekennzeichnet, dass** mindestens ein peroxidisch vernetzendes Polymer a) ausgewählt wird aus Ethylen-Vinylacteat-Copolymeren, funktionalisierte Ethylen-Vinylacetat-Copolymeren, funktionalisierte Ethylen-Butylacrylat-Copolymeren, Ethylen-Propylen-Dien-Copolymeren, Styrol-Butadien-Blockcopolymeren, Styrol-Isopren-Blockcopolymeren, Ethylen-Methylacrylat-Copolymeren, Ethylen-Ethylacrylat-Copolymeren, Ethylen-Butylacrylat-Copolymeren und Ethylen-(Meth)acrylsäure-Copolymeren, insbesondere aus Ethylen-Vinylacteat-Copolymeren und funktionalisierte Ethylen-Vinylacetat-Copolymeren.

3. Thermisch expandierbare Zusammensetzung nach Anspruch 1 oder 2, **dadurch gekennzeichnet, dass** das mindestens eine Polymer b) ein Terpolymer ist, das neben Glycidyl(meth)acrylat bevorzugt als Einheit Monomere ausgewählt aus der Gruppe von Ethylen, Propylen, Acrylsäureester, wie Methyl(meth)acrylat, Ethyl(meth)acrylat, Propyl(meth)acrylat oder Butyl(meth)acrylat, Styrol und Vinylacetat enthält.

**4.** Thermisch expandierbare Zusammensetzung nach einem der Ansprüche 1 bis 3, **dadurch gekennzeichnet, dass** der Glycidyl(meth)acrylatanteil am Polymer b) 3 bis 15 Gew.-%, bevorzugt 6 bis 10 Gew.-%, bezogen auf die Gesamtmasse des Copolymers, beträgt.

**5.** Thermisch expandierbare Zusammensetzung nach einem der Ansprüche 1 bis 4, **dadurch gekennzeichnet, dass** das endotherme chemische Treibmittel ausgewählt ist aus Bicarbonaten, festen, optional funktionalisierten, Polycarbonsäuren und deren Salzen und Mischungen daraus, insbesondere eine Mischung von Natriumhydrogencarbonat und Zitronensäure ist.

**6.** Thermisch expandierbare Zusammensetzung nach einem der Ansprüche 1 bis 5, **dadurch gekennzeichnet, dass** die Zusammensetzung, bezogen auf das Gesamtgewicht der Zusammensetzung, maximal 70 Gew.-% mindestens eines peroxidisch vernetzenden Polymers a), welches nicht Glycidyl(meth)acrylat als Monomer einpolymerisiert enthält, und/oder maximal 20 Gew.-% mindestens eines Polymers b), welches zu einem Anteil von 2 bis 20 Gew.-%, bezogen auf das jeweilige Polymer, Glycidyl(meth)acrylat als Monomer einpolymerisiert enthält, enthält.

**7.** Formkörper, **dadurch gekennzeichnet, dass** der Formkörper eine thermisch expandierbare Zusammensetzung nach einem der Ansprüche 1 bis 6 aufweist.

**8.** Verfahren zum Abdichten und Füllen von Hohlräumen in Bauteilen, zum Verstärken oder Versteifen von Bauteilen, insbesondere hohlen Bauteilen, und zum Verkleben von beweglichen Bauteilen unter Verwendung einer thermisch expandierbaren Zusammensetzung nach einem der Ansprüche 1 bis 6 oder einem Formkörper nach Anspruch 7.

**9.** Verfahren nach Anspruch 8 zum Abdichten und Füllen von Hohlräumen in Bauteilen, zum Verstärken oder Versteifen von Bauteilen, **dadurch gekennzeichnet, dass** ein Formkörper nach Anspruch 7 in ein Bauteil, insbesondere den Hohlraum eines Bauteils, eingebracht wird und anschließend auf eine Temperatur oberhalb von 110°C erhitzt wird, so dass die thermisch expandierbare Zusammensetzung expandiert und das Bauteil abdichtet, füllt, verstärkt oder versteift.

**10.** Verwendung eines Formkörpers nach Anspruch 7 zur akustischen Abdichtung von Hohlräumen in Bauteilen und/oder zur Abdichtung von Hohlräumen in Bauteilen gegen Wasser und/oder Feuchtigkeit oder zum Verstärken oder Versteifen von Bauteilen, insbesondere hohlen Bauteilen.

**Claims**

**1.** A thermally expandable composition, containing

a) at least one peroxidically crosslinking polymer which does not contain glycidyl (meth)acrylate as a monomer in polymerized form,
b) at least one polymer, which in a proportion of 2 to 20 wt.%, based on the respective polymer, contains glycidyl (meth)acrylate as a monomer in polymerized form,
c) at least one peroxide and
d) at least one endothermic chemical blowing agent.

**2.** The thermally expandable composition according to claim 1, **characterized in that** at least one peroxidically crosslinking polymer a) is selected from ethylene-vinyl acetate copolymers, functionalized ethylene-vinyl acetate copolymers, functionalized ethylene-butyl acrylate copolymers, ethylene-propylene-diene copolymers, styrene-butadiene block copolymers, styrene-isoprene block copolymers, ethylene-methyl acrylate copolymers, ethylene-ethyl acrylate copolymers, ethylene-butyl acrylate copolymers and ethylene (meth)acrylic acid copolymers, in particular from ethylene-vinyl acetate copolymers and functionalized ethylene-vinyl acetate copolymers.

**3.** The thermally expandable composition according to claim 1 or 2, **characterized in that** the at least one polymer b) is a terpolymer which, in addition to glycidyl (meth)acrylate, preferably contains monomers as a unit selected from the group of ethylene, propylene, acrylic acid esters, such as methyl (meth)acrylate, ethyl (meth)acrylate, propyl (meth)acrylate or butyl (meth)acrylate, styrene and vinyl acetate.

**4.** The thermally expandable composition according to one of claims 1 to 3, **characterized in that** the proportion of glycidyl (meth)acrylate in polymer b) is 3 to 15 wt.%, preferably 6 to 10 wt.%, based on the total mass of the copolymer.

5. The thermally expandable composition according to one of claims 1 to 4, **characterized in that** the endothermic chemical blowing agent is selected from bicarbonates, solid, optionally functionalized, polycarboxylic acids and their salts and mixtures thereof, in particular is a mixture of sodium hydrogen carbonate and citric acid.

6. The thermally expandable composition according to one of claims 1 to 5, **characterized in that** the composition, based on the total weight of the composition, contains a maximum of 70 wt.% of at least one peroxidically crosslinking polymer a) which does not contain glycidyl (meth)acrylate as a monomer in polymerized form, and/or a maximum of 20 wt.% of at least one polymer b) which contains glycidyl (meth)acrylate as a monomer in polymerized form in a proportion of 2 to 20 wt.%, based on the respective polymer.

7. A shaped body, **characterized in that** the shaped body has a thermally expandable composition according to one of claims 1 to 6.

8. A method for sealing and filling cavities in components, for strengthening or stiffening components, in particular hollow components, and for bonding movable components, using a thermally expandable composition according to one of claims 1 to 6 or a shaped body according to claim 7.

9. The method according to claim 8 for sealing and filling cavities in components and for strengthening or stiffening components, **characterized in that** a shaped body according to claim 7 is inserted into a component, in particular the cavity in a component, and is then heated to a temperature above 110 °C such that the thermally expandable composition expands, and seals, fills, strengthens or stiffens the component.

10. The use of a shaped body according to claim 7 for acoustically sealing cavities in components and/or for sealing cavities in components against water and/or moisture, or for strengthening or stiffening components, in particular hollow components.


**Revendications**

1. Composition thermiquement expansible contenant

   a) au moins un polymère à réticulation peroxydique qui ne contient pas de (méth)acrylate de glycidyle polymérisé en tant que monomère,
   b) au moins un polymère qui contient du (méth)acrylate de glycidyle polymérisé en tant que monomère, dans une proportion de 2 à 20 % en poids par rapport au polymère respectif,
   c) au moins un peroxyde et
   d) au moins un agent gonflant chimique endothermique.

2. Composition thermiquement expansible selon la revendication 1, **caractérisée en ce qu'**au moins un polymère à réticulation peroxydique a) est choisi parmi les copolymères d'éthylène-acétate de vinyle, les copolymères fonctionnalisés d'éthylène-acétate de vinyle, les copolymères fonctionnalisés d'éthylène-acrylate de butyle, les copolymères d'éthylène-propylène-diène, les copolymères séquencés de styrène-butadiène, les copolymères séquencés de styrène-isoprène, les copolymères d'éthylène-acrylate de méthyle, les copolymères d'éthylène-acrylate d'éthyle, les copolymères d'éthylène-acrylate de butyle et les copolymères d'éthylène-(méth)acide acrylique, en particulier parmi les copolymères d'éthylène-acétate de vinyle et les copolymères fonctionnalisés d'éthylène-acétate de vinyle.

3. Composition thermiquement expansible selon la revendication 1 ou 2, **caractérisée en ce que** l'au moins un polymère b) est un terpolymère qui, en plus du (méth)acrylate de glycidyle, contient de préférence des monomères en tant qu'unité choisis dans le groupe constitué par l'éthylène, le propylène, les esters d'acide acrylique, tels que le (méth)acrylate de méthyle, le (méth)acrylate d'éthyle, le (méth)acrylate de propyle ou le (méth)acrylate de butyle, le styrène et l'acétate de vinyle.

4. Composition thermiquement expansible selon l'une des revendications 1 à 3, **caractérisée en ce que** la proportion de (méth)acrylate de glycidyle dans le polymère b) est de 3 à 15 % en poids, de préférence de 6 à 10 % en poids, par rapport à la masse totale du copolymère.

5. Composition thermiquement expansible selon l'une des revendications 1 à 4, **caractérisée en ce que** l'agent gonflant chimique endothermique est choisi parmi les bicarbonates, les acides polycarboxyliques solides, éventuellement fonctionnalisés, et leurs sels et mélanges, en particulier un mélange d'hydrogénocarbonate de sodium et d'acide citrique.

6. Composition thermiquement expansible selon l'une des revendications 1 à 5, **caractérisée en ce que** la composition, par rapport au poids total de la composition, contient au maximum 70 % en poids d'au moins un polymère à réticulation peroxydique a) qui ne contient pas de (méth)acrylate de glycidyle polymérisé en tant que monomère, et/ou au maximum 20 % en poids d'au moins un polymère b) qui contient du (méth)acrylate de glycidyle polymérisé en tant que monomère dans une proportion de 2 à 20 % en poids par rapport au polymère respectif.

7. Corps moulé, **caractérisé en ce que** le corps moulé présente une composition thermiquement expansible selon l'une des revendications 1 à 6.

8. Procédé permettant d'étanchéifier et de remplir des cavités dans des pièces, de renforcer ou de rigidifier des pièces, en particulier des pièces creuses, et de coller des pièces mobiles à l'aide d'une composition thermiquement expansible selon l'une des revendications 1 à 6 ou d'un corps moulé selon la revendication 7.

9. Procédé selon la revendication 8, permettant d'étanchéifier et de remplir des cavités dans des pièces, de renforcer ou de rigidifier des pièces, **caractérisé en ce qu'**un corps moulé selon la revendication 7 est introduit dans une pièce, en particulier dans la cavité d'une pièce, puis est chauffé à une température supérieure à 110 °C, de telle sorte que la composition thermiquement expansible est expansée et étanchéifie, remplit, renforce ou rigidifie la pièce.

10. Utilisation d'un corps moulé selon la revendication 7, permettant l'étanchéification acoustique de cavités dans des pièces et/ou l'étanchéification contre l'eau et/ou l'humidité de cavités dans des pièces, ou le renforcement ou la rigidification de pièces, en particulier de pièces creuses.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008034755 A
- WO 2007039309 A
- WO 2013017536 A

- DE 102012221192
- US 2004260012 A1
- US 6528550 B1